# EUROPEAN PATENT APPLICATION

(11) **EP 3 403 502 A1**
(43) Date of publication of application: **21.11.2018**
(21) Application number: 17179887.9
(22) Date of filing: 05.07.2017
(51) Int. Cl.: A01N 1/02

(54) **CRYOPROTECTANT AND/OR CRYOPRESERVANT COMPOSITION, METHODS AND USES THEREOF**

(30) Priority: 17.05.2017 PT 110080
(71) Applicant: Association For The Advancement Of Tissue Engineering and Cell Based Technologies, 4710-057 Braga (PT)
(72) Inventor: CRUZ DUARTE, Ana Rita, 4715-319 BRAGA (PT); BABO DE ALMEIDA PAIVA, Alexandre, 1700-011 LISBOA (PT); GONÇALVES DOS REIS, Rui Luis, 4250-242 PORTO (PT); PAIVA CRAVEIRO, Rita Paula, 6200-142 COVILHÃ (PT); MARQUES DA SILVA, Joana Maria, 4805-473 SANTA LEOCÁDIA BRITEIROS (PT); BAPTISTA DE CASTRO, Vania Isabel, 4805-339 PONTE (PT)
(74) Representative: Patentree

(57) **Abstract**

The present disclosure relates to cryoprotectant and/or cryopreservant composition, methods and uses thereof. This composition may be used in the preservation and/or protection of cell, organism and/or tissue.

## Description

### Technical field

The present disclosure relates to cryoprotectant and/or cryopreservant composition, methods and uses thereof. This composition may be used in the preservation and/or protection of cell, organism and/or tissue.

### Background

During the freezing process of cells two main events occur. At ambient pressure and when cooled below 0 °C at a fast cooling rate, water forms ice in the form of hexagonal or cubic crystals. The formation of ice crystals can damage the cell membrane and organelles causing cell death. Slow cooling reduces crystal formation but increases the effect of cell dehydration and shrinkage caused by the osmosis of water to the extracellular medium which can also cause physical stress to the cell membrane and organelles also resulting in cell death. In both cases the increase concentration of intracellular concentration of solutes also contributes to cell death. An optimum cooling rate may be found so that the cooling rate is slow enough, thus preventing intracellular ice crystal formation, but fast enough to overcome serious dehydration effects. However, in the case of organ cells from warm-blooded (homeoterm) animals this cooling rate window is very hard to find and complete cell viability cannot be achieve. Cryopreservation by control cooling rate is an expensive method only viable for specific cases such as prokaryote organisms³⁻⁵.

When an aqueous solution is rapidly cooled, crystallization is avoided resulting in water being in a metastable amorphous solid before becoming vitrified in a vitreous solid at temperatures below the glass transition. In the case of animal cells, the cooling rates necessary to achieve water vitrification are not practical and the use of cryoprotectants is necessary. At this condition, it is considered that the cell is ice-crystal free. The avoidance of intracellular ice crystal is the key for cell survival⁶. Different cells and tissues react differently to cooling rate and cryoprotectants. Experimentation is still the most efficient method to determine the best cooling conditions⁷. Cryoprotectants can be divided either by molecular weight (high-MW or low-MW) or by rate of penetration in the cell; ethanol, ethylene-glycol or methylacetamide which penetrate quickly or glycerol which penetrates more slowly. There are also a class of cryoprotectants, such as mono-, oligo and polysaccharides, proteins and biopolymers that do not permeate the cell wall and/or the cytoplasmic membrane and offer extracellular cryoprotection at concentrations between 10 and 40%^{1,4}.

Besides DMSO, which the most widely used cryopreservant, some reports show that poly-alcohols such as glycerol or 1,2 diol-propane have been applied with some degree of success to complex cell structures such as cutaneous and nervous tissue. Non-permeating cryoprotectants such as dextran or trehalose were also used in the cryoprotection of complex tissue, either alone or in combination with a permeating cryoprotectant. In the case of trehalose it was observed that the association of a permeating cryoprotectant was advantageous^{3,7}.

Another important difference between the action of non- and permeating cryoprotectants is salt concentration. In a solution containing only salts, as temperature decreases the salt concentration will increase rapidly, whereas in a solution with the addition of a cryoprotectant the solute concentration will increase in the same way but salt concentration will be lower. In the case of non-permeating cryoprotectant only the extracellular salt concentration is affected and the high solute concentration cause osmotic stress in the cell membrane. This is not the case for permeating cryoprotectants. In this case as water diffuses out the cryoprotectant diffuses into the cell thus maintaining the original cell volume and reducing osmotic stress. Besides osmotic stress, the high concentration of cryoprotecting agents needed in a vitrification process may cause damage due to the low water chemical potential or chemical toxicity⁴.

The strategy that living organisms have found to survive extreme temperature amplitudes relies on the orchestrated production of different biological metabolites.

A notorious wide range of sugar, polyols and aminoacids has been proven to be part of a multicomponent system for the resistance to extreme temperature differences in the animal kingdom. This knowledge was the base for cryoprotectant solutions development in the last century, however this knowledge has not until recently been related with deep eutectic systems.

Natural deep eutectic solvents (NADES) are defined as a mixture of two or more solid or liquid components, such as sugars, aminoacids, organic acids or choline derivatives, which at a particular composition present a high melting point depression, compared to its individual constituents, becoming liquid at room temperature or near room temperature²⁵.

Although research in cryopreservation has been ever evolving the more recent understanding of deep eutectic solvents and more specific the role of naturally occurring DES (NADES) in cells has opened a research window for the development of more efficient, nature-based cryopreservants. NADES are in essence constituted by a hydrogen bond donor and a hydrogen bond acceptor compound. The arrangements of different molecules which may constitute a NADES are estimated to arise up to 10 to the sixth combinations.

It was designed a new cryoprotective systems based on natural deep eutectic systems and have evaluated the behaviour on cryopreservation of cells.

These facts are disclosed in order to illustrate the technical problem addressed by the present disclosure.

### General Description

Freezing is regarded as the best technique for long-term preserving of food, organs and even living organisms. As temperature drops, reactions slow down and microbial activity is reduced to a minimum. Although it is the technique of choice when it comes to preservation, cryopreservation poses several challenges. Water is the most common component of cells in living organisms and when temperature drops and water is turned into ice that same component that is essential to live becomes deleterious. Water crystallization upon freezing disrupts cells in a way that is in many cases irrecoverable upon thawing, originating cell dead in living organisms or organs. There are several solutions to minimize these effects such as the use of specific freeze time gradients to control the number and size of intracellular ice crystals or the use of cryoprotectants, promoting the amorphization of water thus avoiding in part or completely the crystallization process. The solution for more complex systems is the use of cryopreservant agents, however the need for high concentrations of cryopreservants are sometimes needed arising toxicity issues¹. Although cryopreservation is a high value market it lacks efficient solutions. The examples of implementation of this technique in industry are mainly in embryo, sperm and stem cell storage where a large number of cell dead upon thawing is acceptable².

These compounds have been defined as constituents from Natural Deep Eutectic Solvents (NADES) and present great potential for the development of cryoprotective agents avoiding the use of DMSO and other toxic cryoprotective agents.

A cryoprotectant/cryopreservant is a substance used to protect biological tissue, cell or organism from freezing damage.

The present disclosure has the advantage of
using natural and biocompatible molecules as cryopreservants;
avoiding the use of toxic cryoprotective agents, such as DMSO;
increasing the conservation temperature (from -196 °C to 8 °C); preferably between -50 °C to -20 °C;
allowing the storage of cells, tissues and/or organs;
possibility to increase storing time.

In an embodiment, the composition of the present disclosure uses DMSO free cryoprotectants.

The present disclosure relates to a cryoprotectant and/or cryopreservant composition comprising an hydrogen bond donor compound and a hydrogen bond acceptor compound,
wherein the first compound is a polyol or urea,
and the second compound is a sugar or urea,
or a sugar mixture.

In an embodiment, the cryoprotectant and/or cryopreservant composition may comprise a hydrogen bond donor compound and a hydrogen bond acceptor compound, wherein the compounds are select from a list consisting in: sugar, aminoacid, polyol, organic acid, urea or mixtures thereof.

In an embodiment, the cryoprotectant and/or cryopreservant composition may comprise a sugar and polyol, urea and polyol, urea and sugar.

In an embodiment, the sugar may be a monosaccharide, a disaccharide, or a polysaccharide, in particular the sugar may be selected from a list consisting of glucose, fructose, trehalose, or mixtures thereof.

In an embodiment, the polyol may be selected from a list consisting of glycerol, sorbitol, mannitol, or mixture thereof.

In an embodiment, the molar ratio of sugar:polyol may be between 1:0.5 - 1:40; preferably 1:7 - 1:30; more preferably 1:10-1:20.

In an embodiment, the molar ratio of urea:polyol may be between 1:0.25 - 1:10; preferably 1:1 - 1:5; more preferably 1:3-1:4.

In an embodiment, the molar ratio of urea:sugar may be between 1:1 - 10:1; preferably 2:1 - 6:1; more preferably 3:1-4:1.

In an embodiment, the cryoprotectant and/or cryopreservant composition may further comprise an aminoacid, in particular wherein the aminoacid is selected from a list consisting of: proline, histidine, glycine, lysine, tryptophan, aspartic acid, alanine, glutamic acid, leucine, isoleucine, valine, asparagine, serine, glutamine, or mixtures thereof.

In an embodiment, the cryoprotectant and/or cryopreservant composition may comprise
a sugar, polyol and an aminoacid;
urea, a sugar, and an aminoacid;
urea, a polyol, and an aminoacid;
or a sugar mixture and an aminoacid.

In an embodiment, the molar ratio urea:polyol:aminoacid may be between 1:1:0.25 - 3:3:1.

In an embodiment, the molar ratio of urea:polyol:aminoacid may be
1:1:0.25, 1:1:0.5, 1:1:0.75, 1:1:1,
2:1:0.25, 2:1:0.5, 2:1:0.75, 2:1:1,
3:1:0.25, 3:1:0.5, 3:1:0.75, 3:1:1,
1:2:0.25, 1:2:0.5, 1:2:0.75, 1:2:1,
1:3:0.25, 1:3:0.5, 1:3:0.75, 1:3:1,
2:2:0.25, 2:2:0.5, 2:2:0.75, 2:2:1,
3:3:0.25, 3:3:0.5, 3:3:0.75, 3:3:1.

In an embodiment, the molar ratio of urea:sugar:aminoacid may be between 1:1:1-3:2:1.

In an embodiment, the molar ratio of urea:sugar:aminoacid may be 1:1:1, 2:1:1, 3:1:1, 2:2:1, 3:2:1.

In an embodiment, the cryoprotectant and/or cryopreservant composition may further comprise water.

In an embodiment, the cryoprotectant and/or cryopreservant composition may comprise
a sugar, polyol, an aminoacid, and water;
urea, a sugar, an aminoacid, and water;
urea, a polyol, aminoacid, and water;
or a sugar mixture, an aminoacid, and water.

In an embodiment, the molar ratio of urea:sugar:aminoacid:water may be 1:1:1:1 - 2:1:1:4; preferably 1:1:1:2, 1:1:1:3, 1:1:1:4, 2:1:1:1, 2:1:1:3.

In an embodiment, the molar ratio of urea:glucose:proline:water may be 1:1:1:1 - 1:1:1:4.

In an embodiment, the cryoprotectant and/or cryopreservant composition may be for the preservation of a cell or a tissue, wherein a cell or tissue is preserved at most at 8 °C, preferably at most at -4 °C, preferably at most at -20 °C, preferably at most at - 80 °C, preferably at most at -196 °C.

The present disclosure also concerns the use of the cryoprotectant and/or cryopreservant composition as an enhancer of the cell viability.

### Brief Description of the Drawings

The following figures provide preferred embodiments for illustrating the description and should not be seen as limiting the scope of invention.
**Figure 1****:** Thermograms obtained at 10 °C·min⁻¹ for pure water and different mixtures of water and the DES trehalose:glycerol in a 1:30 molar ratio - at temperatures between -90 °C and 40 °C.
**Figure 2****.** Cell viability in contact with different concentrations of natural deep eutectic systems.
**Figure 3****.** Cell viability in contact with different concentrations of the system trehalose:glycerol 1:30 and DMSO. Note % - w/v of the base solution; X:Y is a molar ratio of the compounds.
**Figure 4****:** Morphological observation of the cells preserved after cryopreservation with different systems. On the right, the results of the MTS viability test.. Note % - w/v of the base solution; X:Y is a molar ratio of the compounds.

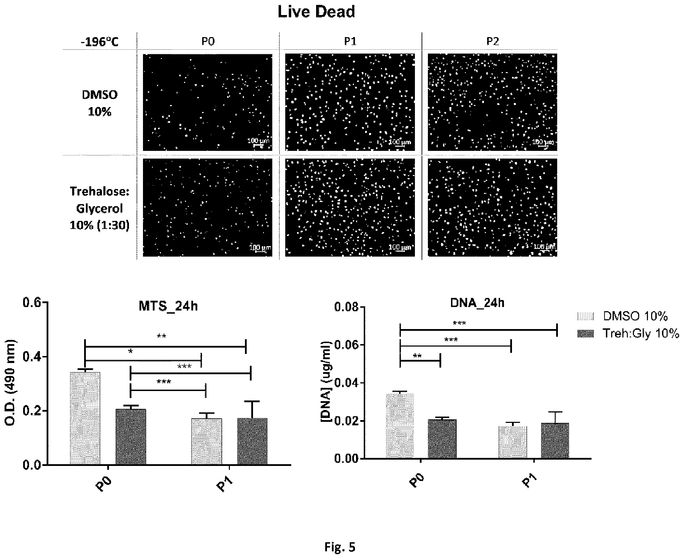

**Figure 5****:** Viability of cells after different passages, live-dead assay, MTS viability and DNA analysis. Note % - w/v of the base solution; X:Y is a molar ratio of the compounds.
**Figure 6****:** Cell viability determined by MTS assay after thawing (P0) and the first passage (P1) using different systems as cryoprotective agents and different storing temperatures.

### Detailed Description

In an embodiment, the natural deep eutectic solvents (NADES) including trehalose-glycerol (molar ratio, 1:30; D(+) trehalose dihydrate, 99%, Sigma-Aldrich, Glycerol, 99.9%, Sigma-Aldrich) were prepared by heating at 70°C, with stirring, until a clear liquid was formed.

In an embodiment, the optical characterization of the NADES samples was acquired at the room temperature by polarized light microscopy (POM), using an Olympus transmission microscope coupled with a Leica digital camera. The covers were prepared with 1-2 droplet of NADES and observed in the microscope.

In an embodiment, the differential scanning calorimetry analysis (DSC) experiments were carried out as follows: the calorimetric experiments were performed in a DSC Q2000 from TA Instruments Inc. (Tzero DSC technology) operating in the Heat Flow T4P option. Measurements were carried out under anhydrous high purity nitrogen at flow rate of 50 mL min⁻¹. DSC Tzero calibration was carried out in the temperature range from -90 to 200 °C. The pure compounds water, trehalose, glycerol and the pure DES (without water addition), were submitted to several cooling and heating runs between -90 and 100 °C (120 °C in the case of pure water), at a rate of 10 °C/min. These samples were encapsulated in Tzero (aluminum) hermetic pans with a Tzero hermetic lid with a pinhole to allow water evaporation. When mixtures of DES and water were analyzed by DSC, several cooling runs between -90 and 40 °C were performed, also at a rate of 10 °C/min, but in this case the hermetic pans did not have a pinhole, to avoid any water loss. In some samples, the scan rate was varied in order to see the influence in the resulting thermal behavior of the water and DES mixture. In those cases, the heating scan rates were 5 °C/min and 20 °C/min.

In an embodiment, the L929 cell lines were grown in DMEM (Sigma, USA), supplemented with 10% heat-inactivetes fetal bovine serum (FBS, Biochron AG, Germany) and 1% antibiotic - antimicotic (Gibco, USA). The cells were cultured in a humidified atmosphere of 37 °C, with 5% CO₂.

In an embodiment, the viability of the systems prepared was measured using a method of direct contact with cells (Direct - contact of NADES with cell culture). The cells were seeded onto a 96-well plate for 24h in the total 1x10⁴ cells/well. After 24h, the medium was removed and extracts with different percentage of NADES, in particular 1%, 5%, 10% and 20% in culture medium were added. The viability of the cells cultured with these extracts was determined by MTS assay, after 24h and 72h.

In an embodiment, the cells were freezed and thawed, in particular the cells were collected by centrifugation (300 rpm for 5 min) and suspended in cool mixture with FBS and cryopreservant (DMSO or Treh-Gly; 5% and 10% cryopresenvant in the FBS). The cells and freezing medium were dispensed into cryotubes (Nunc) (1x10⁶ cells/1mL), and immediately placed into a freezing box (Mr.Frosty) at -20 °C for 2h. Latter they were placed for 24h at -80 °C and then the cryotubes were placed in liquid nitrogen. The cells were frozen for 1, 2 and 3 months. As control trehalose and glycerol alone were used in the same concentration.

In an embodiment, for thawing, cryotubes were rapidly warmed in a 37 °C water bath for approximately 1 min. In a centrifuge tube 5 mL of culture medium were added and the cell suspension were transferred. This suspension (300 rpm for 5 min, at 21 °C) was centrifuged, and the supernatant solution was removed. The cells were resuspended in fresh culture medium and seeded in a 96-well plate.

In an embodiment, the MTS cell viability assay was conducted as follows: the influence of the cryopreservants was determined by MTS assay (Cell Titer 96 Aqueous One Solution Cell Proliferation Assay, Promega, USA) after 24h and 72h of culture. At the time paint the cells were washed with PBS and added the mixture of serum-free cell culture medium and MTS reagent in a 5:1 ratio and incubated for 4h at 37 °C, in a humidified atmosphere containing 5% CO₂. After this time, 100µL of each well was transferred to a 96-well plate. The absorbance was measured at a wavelength of 490 nm using a microplate spectrometer (Synergy HT, Bio-TEK, USA). To the results of absorbance was subtracting the absorbance obtained by blank (culture medium MTS with MTS reagent).

In an embodiment, the live/dead cell viability assay was used (calcein AM/propidium iodide (PI) staining) (n=5 samples per well) to evaluated cell viability. The cells were incubate for 20 min with 2 µL calcein AM (1 mg mL⁻¹, Molecular Probes, Invitrogen, USA) and 3 µL PI (1 mg mL⁻¹, Molecular Probes, Invitrogen, USA) in DMEM medium and protected from light. The cells were washed with PBS to remove residual fluorescent and visualized by inverted Microscope (Axio Observer, ZEISS, Germany).

In an embodiment, DAPI-Phalloidin assay morphological characterization was carried out. The cells were fixed with 10% formalin solution for 45 min. Formalin was removed and replaced by PBS. For DAPI-Phalloidin assay was used 4,6-Diamidino-2-phenyindole, dilactate (DAPI, 20 mg mL⁻¹, BIOTOIUM, USA) and phalloidin-tetramethylrhodamine B isothiocyanate (Phalloidin, 10 mg mL⁻¹, Sigma-Aldrich, USA) (n=5 samples per well, in triplicate). The solution of phalloidin was prepared, 1 mL PBS for 5 µL of phalloidin and 2 µL of DAPI, and added to the cells, that were incubated for 45 minutes at room temperature, and protected from the light. Then the samples were washed with PBS, three times, and visualized in the dark by inverted Microscope (Axio Observer, ZEISS, Germany). The images were obtained in Z-stack mode with a resolution of 4.5 µm (10x) and 2 µm (20x) between slides.

In an embodiment and for DNA quantification the Quant-IT PicoGreen dsDNA Assay Kit was used according to the instructions from the manufacturer. Initially, in the 96-well plate, the cells were lysed by osmotic and thermal shock and the supernatant was collected for the assay. Triplicates were performed for each sample or standard assay. The absorbance was red in a microplate reader (Bio-TEK, USA), using 485 and 528 nm as excitation and emission wavelengths, respectively, according to the spectroscopic properties of the dye. To calculate the DNA amounts the absorbance values were adjusted with a calibration curve.

In an embodiment, new NADES were developed based on, but not limited to the combinations of the metabolites listed in table 1, more specifically, based on trehalose, glucose, glycerol, as well as other aminoacids, polyalcohols and sugars.

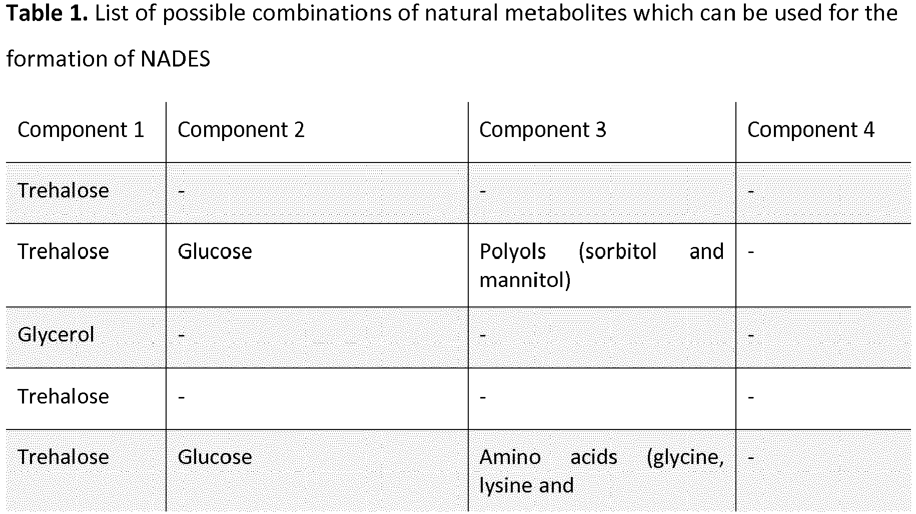

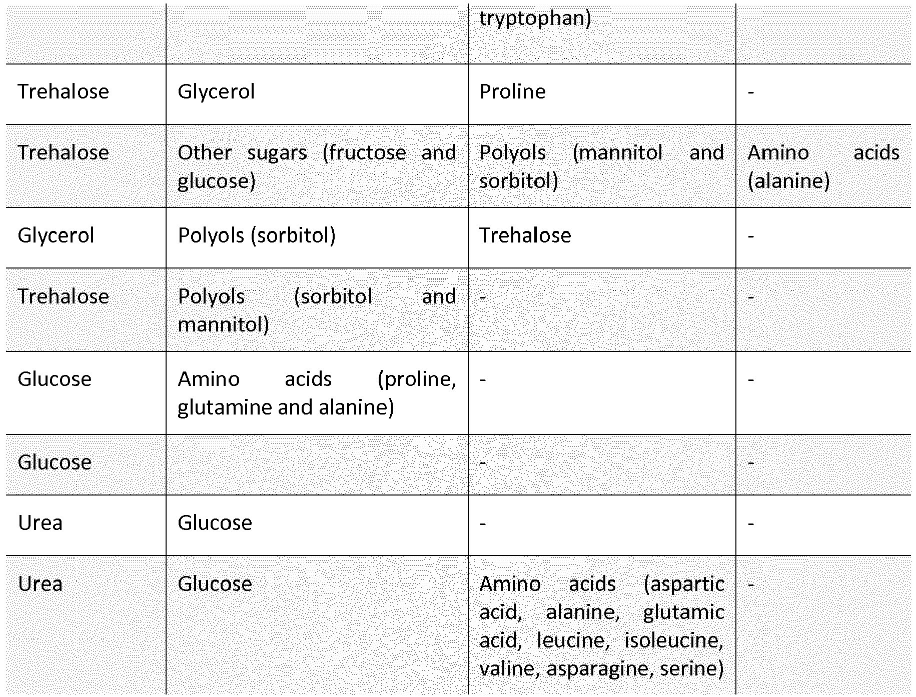

In an embodiment, different combinations with different molar ratios were produced in this work (table 2).

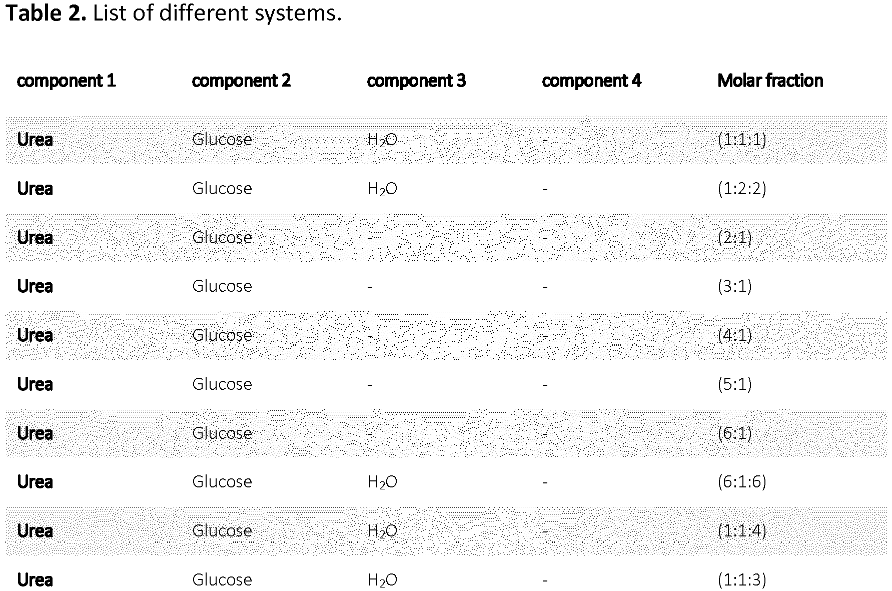

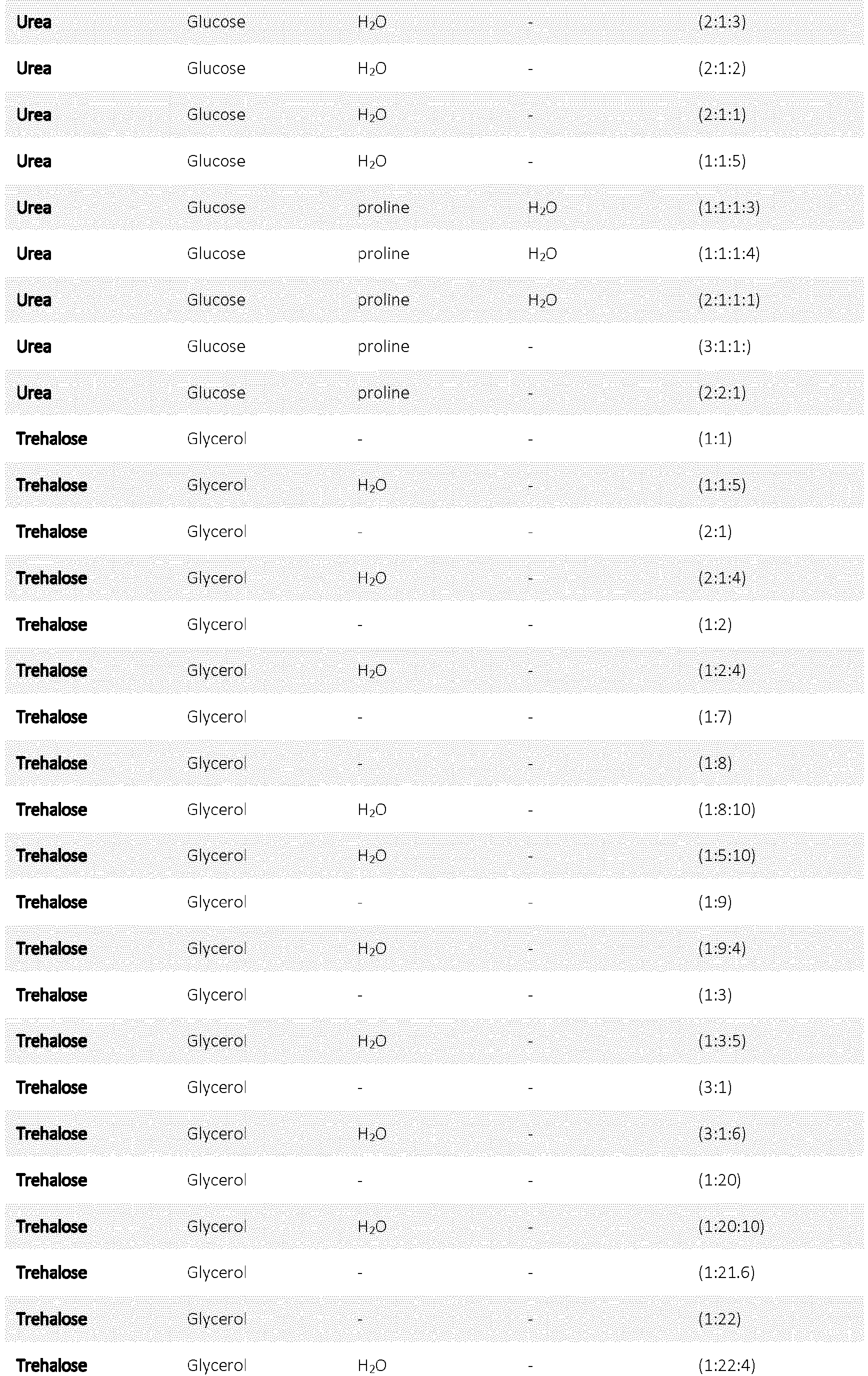

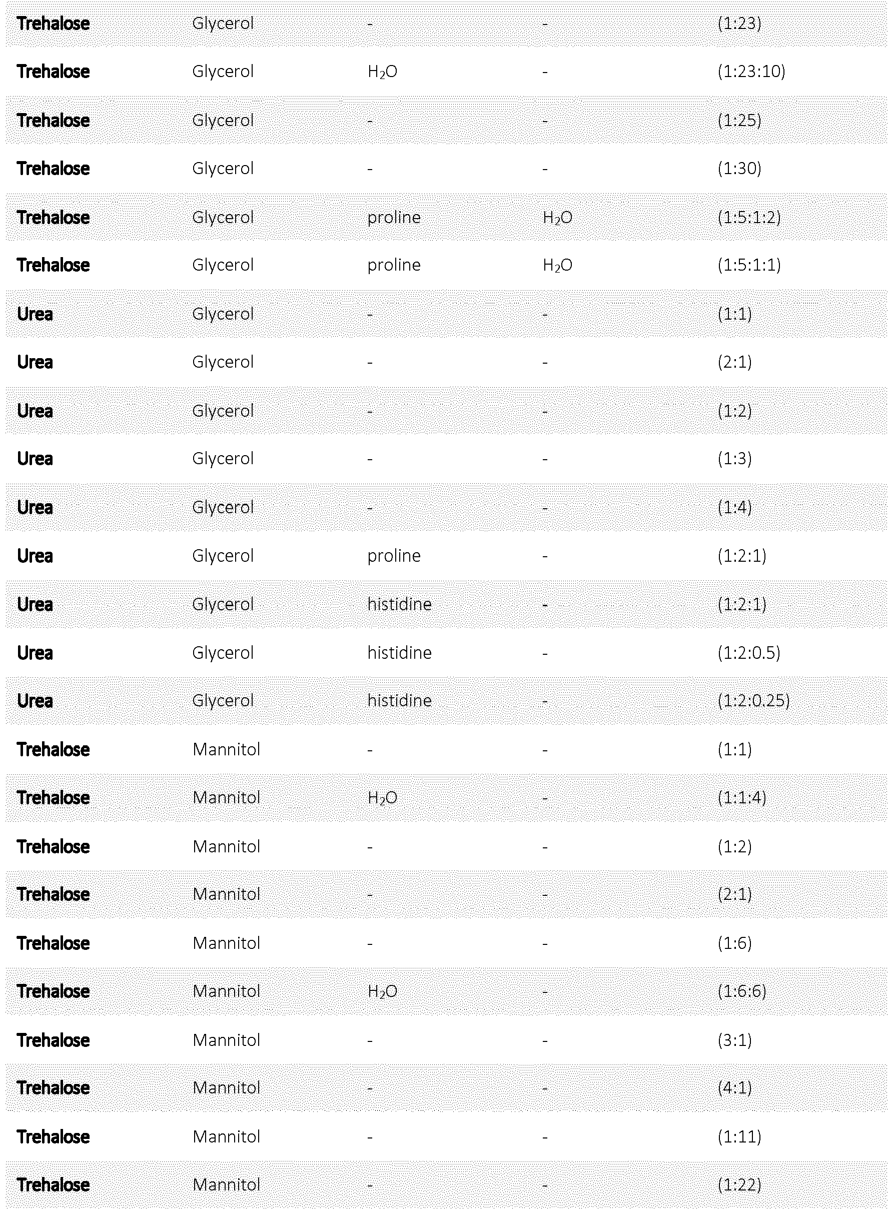

In an embodiment, to determine the preliminary viability of the new NADES, for the ones that present a melting temperature below or near room temperature, water will be mixed with the NADES at different compositions. The thermal characterization of the systems NADES/water will be carried out through differential scanning calorimetry (DSC).

In an embodiment, the minimum concentrations of NADES required in the formulations for vitrification and/or significant reduction of melting temperature was studied. The understanding of the phase transitions which occur in cooling-heating cycles is crucial for the evaluation of the systems as cryopreservants. Crystallization is a kinetic phenomenon, therefore, different cooling and heating rates was tested within - 120 °C and 40 °C to determine if a significant reduction of the melting temperature occurs or if the crystallization phenomenon is completely circumvented being only observed a the glass transition temperature, meaning that the complete vitrification of water was achieved. Moreover by maintaining the amorphous material at low temperature during a period of time (annealing), the formation of crystals may be promoted.

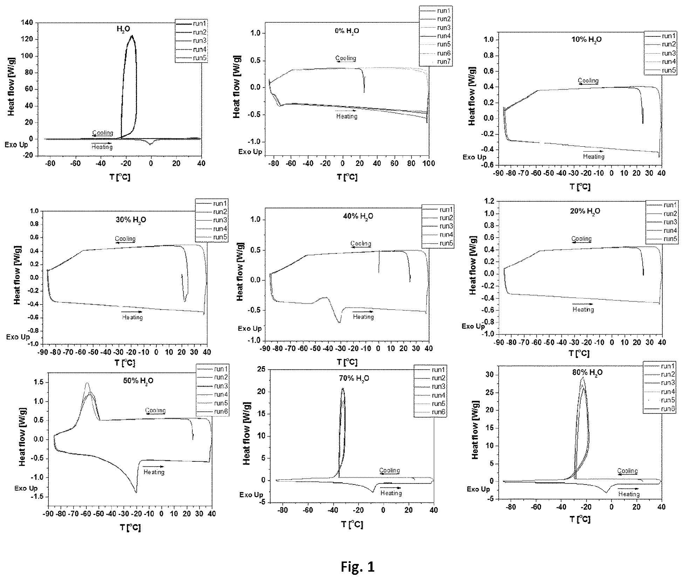

In an embodiment and in order to evaluate the influence of the DES Trehalose:glycerol (1:30) in water, several mixtures were prepared, with different percentages of water and DES (in 10 wt % intervals). In order to see the potential of this DES to prevent water crystallization, the thermal behaviour of each of this mixtures was analyzed by DSC. In **Figure 1****,** the thermograms for pure water and for the prepared DES are presented. For the DES thermogram it is observed that no thermal events occur, at least until the DSC detection limit. When certain amounts oftrehalose:glyerol are added to water, its thermal behaviour is affected, and the alterations are dependent on the amount of trehalose:glyerol present in the mixture. For samples with more than 60 wt % of trehalose:glyerol, no thermal events are observed in the thermograms, meaning that the mixtures behave as amorphous material, with no evidence of water crystals presence. When H₂O and trehalose:glyerol in the wt % ratio of 40:60 are mixed, a cold crystallization peak and a melting peak are observed in the DSC **(****Figure 1****),** but still, no crystallization peak is observed. For higher amounts of water (from 50 to 90 wt%) a melting peak is always observed. From this peak a melting temperature Tm can be calculated, defined by the onset of the peak, and the melting enthalpy variation (ΔHm) can be determined from the area under the peak.

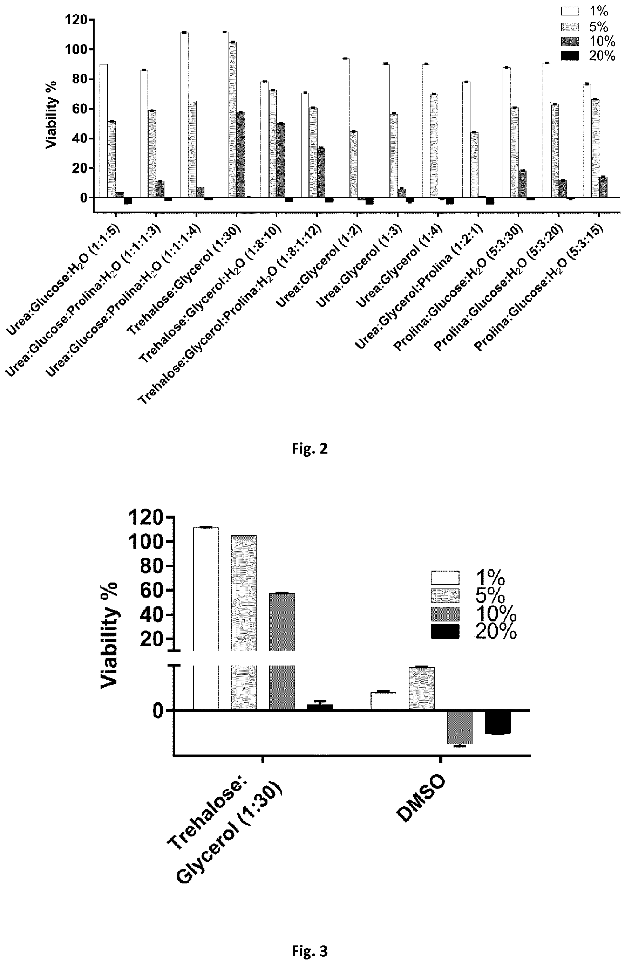

In an embodiment, for the NADES/water mixtures that present a significant reduction of the water melting temperature or that are completely vitrified, toxicity test were performed. Although NADES constituents are naturally occurring in the human body and no toxicity issue should arise, the interaction between the two components to form the NADES may cause some previously unknown toxicity. To assure that the chosen NADES may in fact be used as cryopreservants, it is paramount that they do not present any significant toxicity to the tissues. To determine the toxicity of the NADES, cytotoxicity of NADES/water mixtures was assessed following the ISO guidelines. Cytotoxicity of the fractions was evaluated for different concentrations determining cell viability using absorbance. **Figure 2** presents the results of the viability testing performed on different systems tested.

In an embodiment and in comparison with the gold standard DMSO which is used as cryoprotective agent it is noticeable the differences in the toxicity profile of the agents **(****figure 3****).** The system Treh:Gly (1:30) present good viability results in contact with cells at 37 °C, until a concentration of 10 wt%. The cells in contact with DMSO present a very low viability, even for low concentrations, such as 1 or 5% and increasing the concentration of DMSO in the culture media to 10% and 20% it leads to cell dead.

In an embodiment, in vitro biological evaluation of NADES performance as cryopreservant was assessed using the L929 cell line. As said before, cryopreservation may cause chilling injury associated to osmotic stress, therefore, cell osmotic tolerance and membrane integrity when in contact with the developed NADES formulations has to be studied.

In an embodiment, cryopreserved cells were maintained in storage for different periods at -20 °C, -80 °C and -196 °C (1, 2 and 3 months) and different concentrations of different systems, always in comparison with DMSO, which was used as control. After thawing process the cells was assessed by microscopy. These will provide evidences on the impact of NADES as cryopreservants for different cell types and storage conditions.

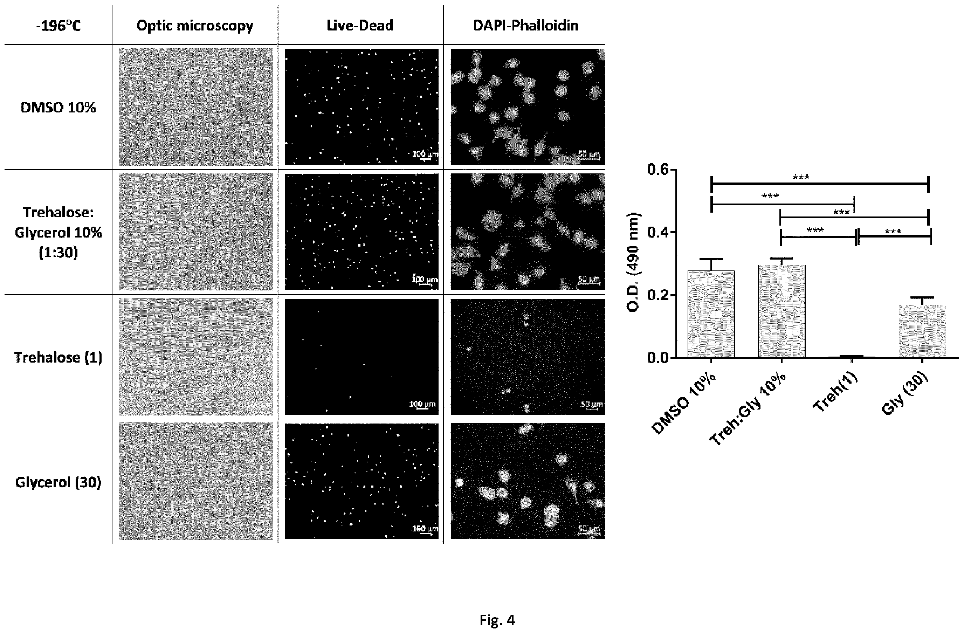

In an embodiment and additionally to other embodiments, live-dead assay and Dapi-Phalloidin tests were carried out in order to evaluate cell viability and check the integrity of the cell membrane after thawing. **Figure 4** presents the morphological analysis and first test on the cell viability. As it can be observed from the images the cryopreservation of the cells with 10% DMSO and Trehalose:glycerol (1:30) have a similar response. On the other hand when using trehalose or glycerol alone the cell viability is somewhat compromised.

In an embodiment, the MTS viability testing confirms these results. Hence there is in fact a synergistic effect due to the presence of the system trehalose:glycerol when compared to the components alone.

In an embodiment, the morphology of the cells is similar between the two systems and there are also no differences between the passages. DAPI-Phalloidin shows the integrity of the cell membrane and the elongated shape of the cells after culture.

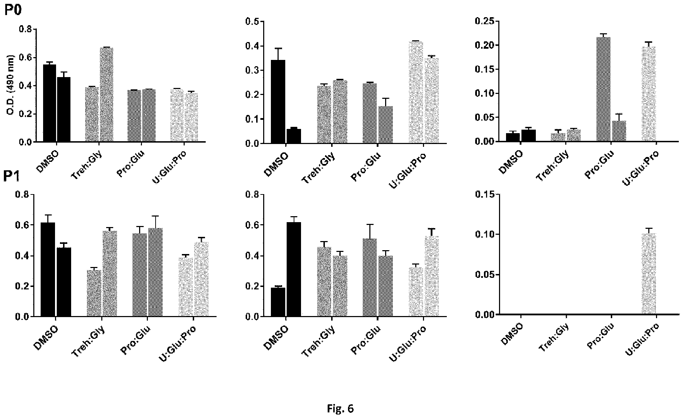

In an embodiment, different systems were tested under different storing temperatures, in particular at -196, -80 and -20 °C. As it can be seen in **figure 6** it is possible to preserve the cells and maintain their viability at -80 °C. Different systems have been tested and comparable results to DMSO were obtained.

In an embodiment, surprisingly when the system urea:glucose:proline:H₂O (1:1:1:2) is used as cryoprotective agent cells can be stored at -20 °C at least for one month without compromising cell viability, and can furthermore be replated and grown (P1), contrarily to what happens with the other systems studied.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

### REFERENCES

(1) Hub, Z. Protectants used in the cryopreservation of microorganisms q. 2003, 46, 205-229.
(2) Karlsson, J. O. M.; Toner, M. Long-term storage of tissues by cryopreservation: Critical issues. Biomaterials 1996, 17 (3), 243-256.
(3) Liu, D.; Pan, F. Advances in Cryopreservation of Organs *. 2016, 36 (2), 153-161.
(4) FAO. Basic principles of cryopreservation. Cryoconservation Anim. Genet. Resour. 2012, 85-94.
(5) Segall, P. E. Low Temperature Preservation in Medicine and Biology, edited by M. J. Ashwood-Smith and J. Farrant. Med. Phys. 1982, 9 (3), 19-44.
(6) Huebinger, J.; Han, H. M.; Hofnagel, O.; Vetter, I. R.; Bastiaens, P. I. H.; Grabenbauer, M. Direct Measurement of Water States in Cryopreserved Cells Reveals Tolerance toward Ice Crystallization. Biophys. J. 2016, 110 (4), 840-849.
(7) Bakhach, J. The cryopreservation of composite tissues: Principles and recent advancement on cryopreservation of different type of tissues. Organogenesis 2009, 5 (3), 119-126.
(8) John M. Kimble. Global Climate Change and Cold Regions Ecosystems; R Lal, R M Kimble, B. A. S., Ed.; CRC Press, 2000.
(9) Walters, K. R.; Sformo, T.; Barnes, B. M.; Duman, J. G. Freeze tolerance in an arctic Alaska stonefly. J. Exp. Biol. 2009, 212 (Pt 2), 305-312.
(10) Sømme, L.; Meier, T. Cold tolerance in Tardigrada from Dronning Maud Land, Antarctica. Polar Biol. 1995, 15 (3), 221-224.
(11) Right, J. C. W. Cryptobiosis 300 Years on from van Leuwenhoek : What Have We Learned about Tardigrades ? *. 2001, 240 (August 2000), 563-582.
(12) Westh, P.; Ramlov, H. Trehalose accumulation in the tardigrade Adorybiotus coronifer during anhydrobiosis. Journal of Experimental Zoology. 1991, pp 303-311.
(13) Hengherr, S.; Heyer, A. G.; Köhler, H. R.; Schill, R. O. Trehalose and anhydrobiosis in tardigrades - Evidence for divergence in responses to dehydration. FEBS J. 2008, 275 (2), 281-288.
(14) Ko 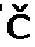 tál, V.; Dole 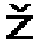 al, P.; Rozsypal, J.; Moravcová, M.; Zahradní 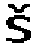 ková, H.; 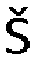 imek, P. Physiological and biochemical analysis of overwintering and cold tolerance in two Central European populations of the spruce bark beetle, lps typographus. J. Insect Physiol. 2011, 57 (8), 1136-1146.
(15) Ko 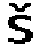 tál, V.; 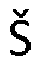 imek, P. Dynamics of cold hardiness, supercooling and cryoprotectants in diapausing and non-diapausing pupae of the cabbage root fly, Delia radicum L. J. Insect Physiol. 1995, 41 (7), 627-634.
(16) Overgaard, J.; Malmendal, A.; Sørensen, J. G.; Bundy, J. G.; Loeschcke, V.; Nielsen, N. C.; Holmstrup, M. Metabolomic profiling of rapid cold hardening and cold shock in Drosophila melanogaster. J. Insect Physiol. 2007, 53 (12), 1218-1232.
(17) Lee, R.; Dommel, R.; Joplin, K.; Denlinger, D. Cryobiology of the freeze-tolerant gall fly Eurosta solidaginis: overwintering energetics and heat shock proteins. Clim. Res. 1995, 5, 61-67.
(18) Rozsypal, J.; Ko 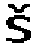 tál, V.; Zahradní 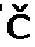 ková, H.; 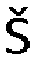 imek, P. Overwintering Strategy and Mechanisms of Cold Tolerance in the Codling Moth (Cydia pomonella). PLoS One 2013, 8 (4).
(19) Lalouette, L.; Ko 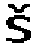 tál, V.; Colinet, H.; Gagneul, D.; Renault, D. Cold exposure and associated metabolic changes in adult tropical beetles exposed to fluctuating thermal regimes. FEBS J. 2007, 274 (7), 1759-1767.
(20) Morrissey, R. E.; Baust, J. G. The ontogeny of cold tolerance in the gall fly, Eurosta solidagensis. J. Insect Physiol. 1976, 22 (3), 431-437.
(21) Lee, K. Y.; Chang, Y. D.; Kim, Y. G. Trehalose, a Major Sugar Cryoprotectant of the Overwintering Rice Water Weevil, Lissorhoptrus oryzophilus (Coleoptera: Curculionidae). J. Asia. Pac. Entomol. 2002, 5 (1), 35-41.
(22) Ko 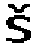 tál, V.; Zahradní 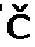 ková, H.; 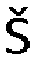 imek, P.; Zelený, J. Multiple component system of sugars and polyols in the overwintering spruce bark beetle, lps typographus. J. Insect Physiol. 2007, 53 (6), 580-586.
(23) Sformo, T.; Walters, K.; Jeannet, K.; Wowk, B.; Fahy, G. M.; Barnes, B. M.; Duman, J. G. Deep supercooling, vitrification and limited survival to -100oC in the Alaskan beetle Cucujus clavipes puniceus (Coleoptera: Cucujidae). J. Exp. Biol. 2010, 213, 502-509.
(24) Choi, Y. H.; van Spronsen, J.; Dai, Y.; Verberne, M.; Hollmann, F.; Arends, I. W. C. E.; Witkamp, G.-J.; Verpoorte, R. Are natural deep eutectic solvents the missing link in understanding cellular metabolism and physiology? Plant Physiol. 2011, 156 (4), 1701-1705.
(25) Paiva, A.; Craveiro, R.; Aroso, I.; Martins, M.; Reis, R. L.; Duarte, A. R. C.; Paiva, Alexandre; Craveiro, Rita; Aroso, Ivo; Martins, Marta; Reis, Rui; Duarte, A. R. Natural Deep Eutectic Solvents - Solvents for the 21st century. Sustain. Chem. Eng. 2014, ASAP.
(26) Dai, Y.; van Spronsen, J.; Witkamp, G.-J.; Verpoorte, R.; Choi, Y. H. Ionic liquids and deep eutectic solvents in natural products research: mixtures of solids as extraction solvents. J. Nat. Prod. 2013, 76 (11), 2162-2173.
(27) Francisco, M.; van den Bruinhorst, A.; Kroon, M. C. Low-transition-temperature mixtures (LTTMs): a new generation of designer solvents. Angew. Chem. Int. Ed. Engl. 2013,52 (11), 3074-3085.
(28) Durand, E.; Lecomte, J.; Villeneuve, P. From green chemistry to nature: The versatile role of low transition temperature mixtures. Biochimie 2016, 120, 119-123.

## Claims

1. Cryoprotectant and/or cryopreservant composition comprising a hydrogen bond donor compound and a hydrogen bond acceptor compound,
wherein the first compound is a polyol or urea,
and the second compound is a sugar or urea,
or a sugar mixture.

2. Cryoprotectant and/or cryopreservant composition comprising a hydrogen bond donor compound and a hydrogen bond acceptor compound,
wherein the compounds are select from a list consisting in: sugar, aminoacid, polyol, organic acid, urea or mixtures thereof.

3. Cryoprotectant and/or cryopreservant composition according to any one of the previous claims comprising a sugar and polyol, urea and polyol, urea and sugar.

4. Cryoprotectant and/or cryopreservant composition according to any one of the previous claims wherein the sugar is a monosaccharide, a disaccharide, or a polysaccharide.

5. Cryoprotectant and/or cryopreservant composition according to any one of the previous claims wherein the sugar is selected from a list consisting of glucose, fructose, trehalose, or mixtures thereof.

6. Cryoprotectant and/or cryopreservant composition according to any one of the previous claims wherein the polyol is selected from a list consisting of glycerol, sorbitol, mannitol, or mixture thereof.

7. Cryoprotectant and/or cryopreservant composition according to any one of the previous claims wherein the molar ratio of sugar:polyol is between 1:0.5 - 1:40; preferably 1:7 - 1:30; more preferably 1:10-1:20.

8. Cryoprotectant and/or cryopreservant composition according to any one of the previous claims wherein the molar ratio of urea:polyol is between 1:0.25 - 1:10; preferably 1:1 - 1:5; more preferably 1:3-1:4.

9. Cryoprotectant and/or cryopreservant composition according to any one of the previous claims wherein the molar ratio of urea:sugar is between 1:1 - 10:1; preferably 2:1 - 6:1; more preferably 3:1-4:1.

10. Cryoprotectant and/or cryopreservant composition according to any one of the previous claims further comprising an aminoacid, preferably wherein the aminoacid is selected from a list consisting of: proline, histidine, glycine, lysine, tryptophan, aspartic acid, alanine, glutamic acid, leucine, isoleucine, valine, asparagine, serine, glutamine, or mixtures thereof.

11. Cryoprotectant and/or cryopreservant composition according to any one of the previous claim comprising
a sugar, polyol and an aminoacid;
urea, a sugar, and an aminoacid;
urea, a polyol, and an aminoacid;
or a sugar mixture and an aminoacid.

12. Cryoprotectant and/or cryopreservant composition according any one of to the previous claims wherein the molar ratio urea:polyol:aminoacid is between 1:1:0.25 -3:3:1.

13. Cryoprotectant and/or cryopreservant composition according to any one of the previous claims wherein the molar ratio of urea:sugar:aminoacid is between 1:1:1 -3:2:1, preferably wherein the molar ratio of urea:sugar:aminoacid is 1:1:1, 2:1:1, 3:1:1, 2:2:1, 3:2:1.

14. Cryoprotectant and/or cryopreservant composition according to any one of the previous claims further comprising water.

15. Cryoprotectant and/or cryopreservant composition according to any one of the previous claims wherein the molar ratio of urea:sugar:aminoacid:water is 1:1:1:1 - 2:1:1:4; preferably 1:1:1:2, 1:1:1:3, 1:1:1:4, 2:1:1:1, 2:1:1:3; preferably wherein the molar ratio of urea:glucose:proline:water is 1:1:1:1 - 1:1:1:4.

16. Use of the cryoprotectant and/or cryopreservant composition according to any one of the previous claims as an enhancer of the cell viability.
